# EUROPEAN PATENT SPECIFICATION

(11) **EP 4 477 515 B1**
(45) Date of publication and mention of the grant of the patent: **22.07.2026**
(21) Application number: 24180213.1
(22) Date of filing: 05.06.2024
(51) Int. Cl.: B62K 19/18, B62K 19/08, B62K 19/10, B62K 19/16, B62K 19/36, B62K 19/32, B62K 25/28, B62K 3/04, B62K 19/20, B62K 19/34, B62M 6/55

(54) **BICYCLE FRAME UNIT AND MANUFACTURING METHOD THEREOF**
FAHRRADRAHMENEINHEIT UND HERSTELLUNGSVERFAHREN DAFÜR
UNITÉ DE CADRE DE BICYCLETTE ET SON PROCÉDÉ DE FABRICATION

(30) Priority: 13.06.2023 US 202363472601 P
(43) Date of publication of application: 18.12.2024
(73) Proprietor: Astro Tech Co., Ltd., Changhua County (TW)
(72) Inventor: Hu, Samuel, Changhua City, Changhua County (TW); Liu, Liu-Cheng, Changhua City, Changhua County (TW); Chen, Chang-Chun, Changhua City, Changhua County (TW)
(74) Representative: Petraz, Gilberto Luigi

(56) References cited:
- EP-A1- 2 982 591
- CN-A- 102 303 672
- CN-U- 216 301 359
- DE-A1- 102014 107 851
- DE-C- 944 173
- FR-A1- 2 736 031
- IT-A1- 202000 003 016
- KR-A- 20110 023 604
- KR-A- 20160 143 447
- US-A1- 2008 048 410
- US-A1- 2009 212 530

## Description

### 1. Field of the Invention

The present invention relates to manufacturing of bicycle frames, namely to a bicycle frame unit and a manufacturing method thereof.

### 2. Description of Related Art

It is from long time ago; a bike frame consists of tubular fames to form a closed loop. Typical tubular frames are manufactured by its traditional way for long time and are connected with each other by wielding in the joint. More j oints mean more possible fragile nodes. With a modem need, those tubular frames are tried to expand its inner volume to contain more parts inside like electrical parts. However again with the traditional way, a fragile point may be accidently created during the expanding procedure.

In a conventional bicycle frame, multiple shell parts are manufactured first and then connected to form a main structure of the conventional bicycle frame so as to improve manufacturing efficiency. In one kind of the conventional bicycle frame made of metallic materials such as aluminum alloy, sheet metals are first stamped to form the multiple shell parts, and then the multiple shell parts are connected via welding to form a bicycle frame unit. In another kind of the conventional bicycle frame made of thermoplastic composites material such as carbon fiber, the multiple shell parts are respectively formed by heat compression molding and are connected via local fusing or another heat compression molding to form a bicycle frame unit.

However, during the connecting processes mentioned above, redundant materials are likely to be formed on interiors of the multiple shell parts of the bicycle frame unit, which interferes with construction of other bicycle components. For instance, redundant materials inside a seat tube obstruct insertion of a seat post; redundant materials inside a head tube obstruct mounting a front fork therethrough.

If a manufacturer trims the shell parts to remove the redundant materials, the trimming process increases steps of the manufacturing processes and lowers the manufacturing efficiency. Moreover, size control can be thereby difficult, and the bicycle frame unit may have insufficient structural strength. To conclude, when manufacturing the conventional bicycle frame, the problem of the redundant materials produced during the connecting processes and interfering with the construction of conventional bicycle frame needs to be overcome indeed.

US 2009/212530 A1 discloses a bicycle frame unit according to the preamble of claim 1.

The main objective of the present invention is to provide a bicycle frame unit and a manufacturing method thereof that overcomes the problem of the redundant materials without inappropriately increasing steps of manufacturing processes and weight of the bicycle frame.

A bicycle frame unit according to the invention is defined in independent claim 1. A manufacturing method according to the invention is defined in independent claim 6. Preferred embodiments of the invention are provided in the dependent claims.

The bicycle frame unit has two half casing parts and at least one annular supporting element. The two half casing parts are connected to each other along a connecting direction and are substantially symmetrical. The at least one annular supporting element is connected between the two half casing parts and has a connecting hole formed therein. The connecting hole is configured for matching an outer contour of an external post, namely a seat post or a front fork stem.

The bicycle frame unit has at least one gap formed between the two half casing parts and the at least one annular supporting element, and the at least one gap is filled with a connecting material.

The manufacturing method of a bicycle frame unit has the following steps: a casing forming step, molding one or more sheets into two half casing parts being substantially symmetrical and configured to abut against each other along a connecting direction; an abutting step, abutting the two half casing parts along the connecting direction and placing at least one annular supporting element between the two half casing parts to form at least one gap between the two half casing parts and the at least one annular supporting element; a connecting step, connecting the two half casing parts via a connecting means and filling the at least one gap with a connecting material so as to finish a bicycle frame unit.

Other objectives, advantages and novel features of the invention will become more apparent from the following detailed description when taken in conjunction with the accompanying drawings.

### In the drawings:

Fig. 1 is a side view of a first preferred embodiment of a bicycle frame unit in accordance with the present invention;
Fig. 2 is a perspective view of one of two half casing parts of the bicycle frame unit in Fig. 1;
Fig. 3 is an exploded view of the bicycle frame unit in Fig. 1;
Fig. 4 is a top side view of the bicycle frame unit in Fig. 1 before the two half casing parts are connected;
Fig. 5 is a process flow diagram of a manufacturing method of the bicycle frame unit in Fig. 1;
Fig. 6 is a side view of a second preferred embodiment of the bicycle frame unit in accordance with the present invention;
Fig. 7 is a side view of a third preferred embodiment of the bicycle frame unit in accordance with the present invention;
Fig. 8 is a perspective view of a fourth preferred embodiment of the bicycle frame unit in accordance with the present invention;
Fig. 9 is a perspective view of a fifth preferred embodiment of the bicycle frame unit in accordance with the present invention;
Fig. 10 is a side view of a bicycle frame comprising the bicycle frame unit in Fig. 9;
Fig. 11 is a perspective view of a sixth preferred embodiment of the bicycle frame unit in accordance with the present invention;
Fig. 12 is a perspective view of a seventh preferred embodiment of the bicycle frame unit in accordance with the present invention;
Fig. 13 is an exploded view of the bicycle frame unit in Fig. 12;
Fig. 14 is a sectional front side view of the bicycle frame unit in Fig. 12;
Fig. 15 is an enlarged top side view of the bicycle frame unit in Fig. 12;
Fig. 16 is a perspective view of a bicycle frame comprising the bicycle frame unit in Fig. 12; and
Fig. 17 is a sectional front side view of an eighth preferred embodiment of the bicycle frame unit in accordance with the present invention.

The present invention provides a bicycle frame unit 100 for constructing a bicycle frame. Specifically, the bicycle frame unit 100 includes a portion of the bicycle frame; e.g., the bicycle frame unit 100 may be a seat tube, a combination of the seat tube and a motor mount, a combination of a head tube, a down tube, and a motor mount, or a combination of a head tube and a top tube, etc. When constructing the bicycle frame, the bicycle frame unit is connected to other components of the bicycle frame; specifically, the components to be connected depend on bicycle types.

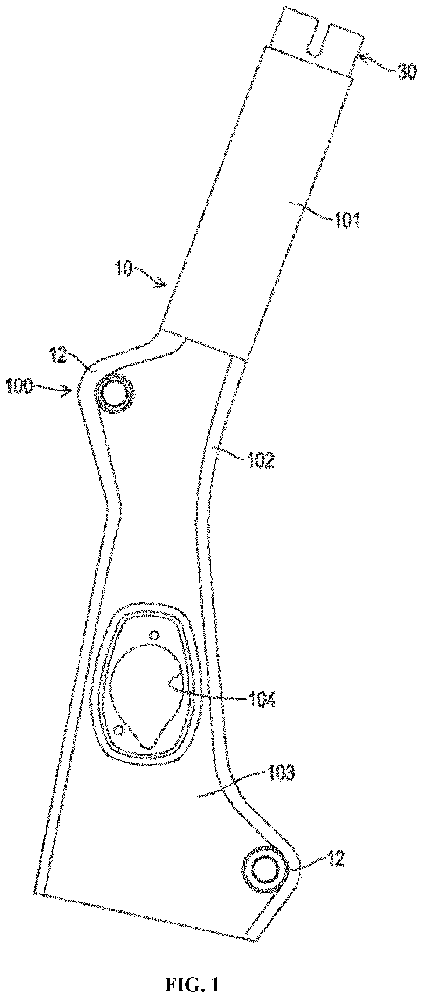

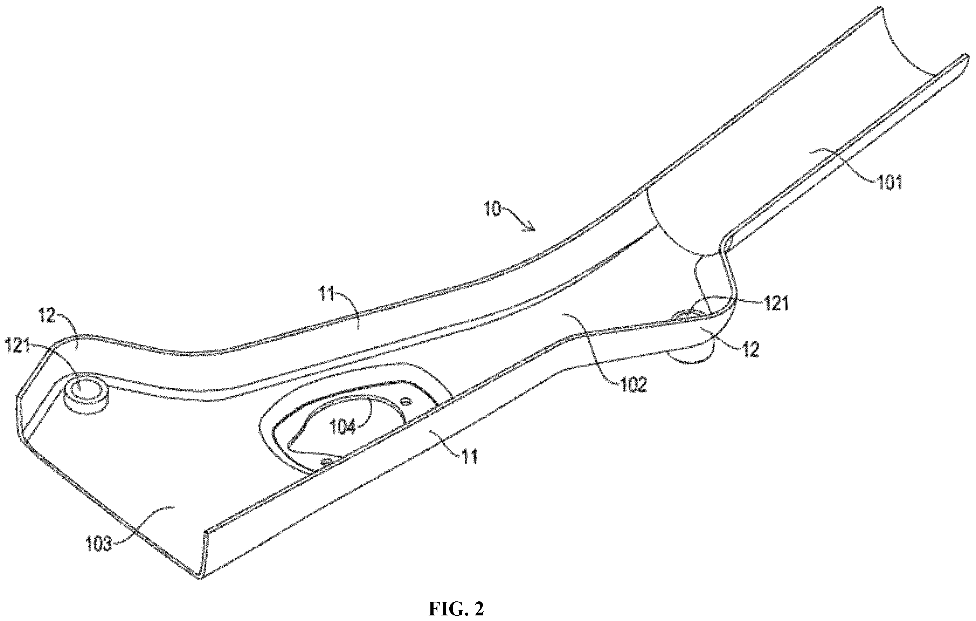

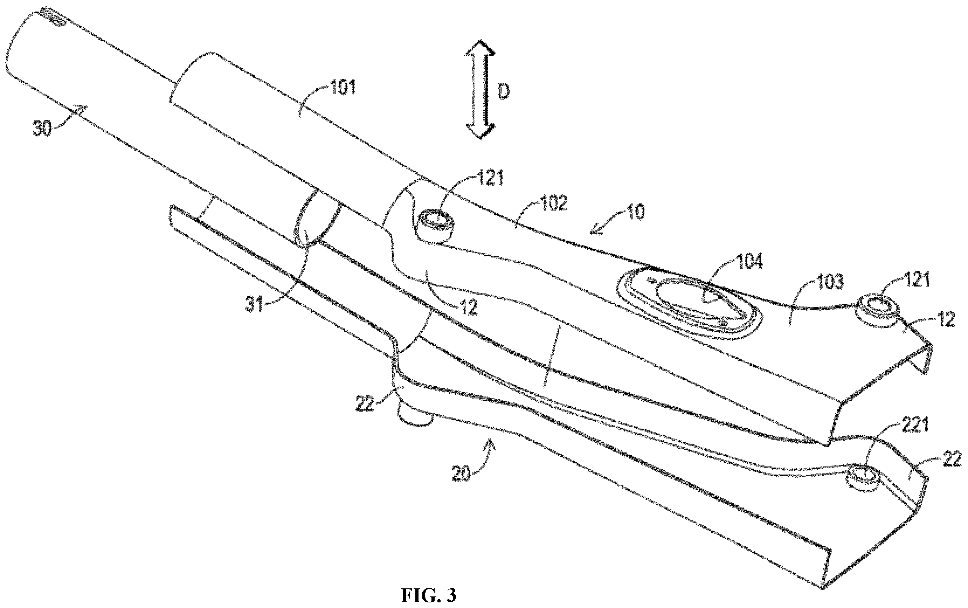

With reference to Figs. 1 to 4, the bicycle frame unit 100 of a first preferred embodiment in accordance with the present invention is a seat tube and has two half casing parts 10, 20 and an annular supporting element 30. With reference to Fig. 3, the two half casing parts 10, 20 are connected to each other along a connecting direction D and are substantially symmetrical. The connecting direction D corresponds to a left-and-right direction with respect to an onward direction of a bicycle. Further, with reference to Figs. 2 and 3, one of the two half casing parts 10 has a first portion 101, a second portion 102, and a third portion 103, the other half casing part 20 has counterparts for the three portions such that each portion of the two half casing parts 10, 20 has a corresponding portion, and thereby the two half casing parts 10, 20 are substantially symmetrical. However, in one preferred embodiment, the second portion 102 or the third portion 103 has a larger interior space than the first portion 101, therefore the second portion 102 and the third portion 103 are collectively called enlarged portion. The first portion 101 is more tube shaped and the enlarged portion is formed to create a space enough to receive functional parts and components and is form a shape to sit axis, hub, or pivot for certain mechanical design. The enlarged portion is not necessary in tube shape. Therefore, the bicycle frame unit 100 has two asymmetrical portions: first portion 101 and enlarged portion in vertical direction while the bicycle frame unit 100 is formed by two symmetrical casing parts 10, 20.

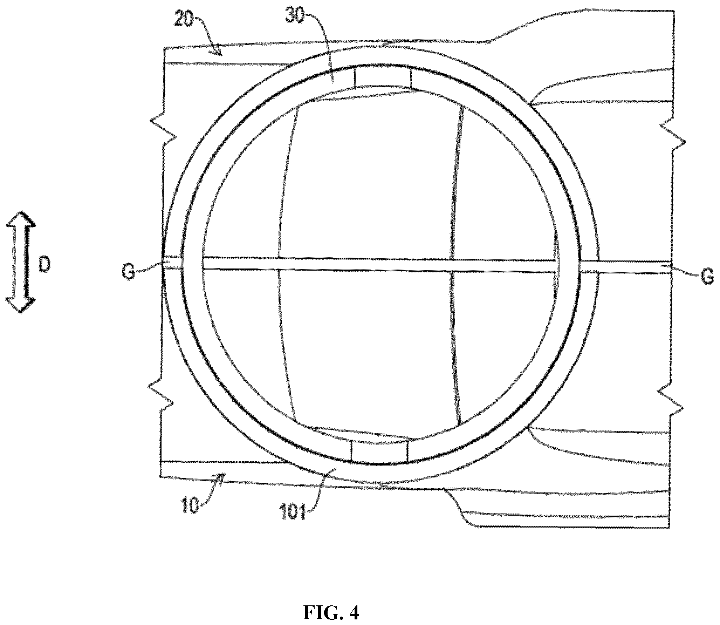

Further, the annular supporting element 30 is connected between the two half casing parts 10, 20 and has a connecting hole 31 formed therein. The connecting hole 31 is configured for matching an outer contour of an external post. In the first preferred embodiment, the first portions 101 of the two half casing parts 10, 20 are connected to be tubular. The annular supporting element 30 is a cylindrical liner tube, and the connecting hole 31 of the annular supporting element 30 is configured to be suitably installed with a seat post (i.e. the external post). The bicycle frame unit 100 has at least one gap G formed between the two half casing parts 10, 20 and the annular supporting element 30. With reference to Fig. 4, in the first preferred embodiment, the at least one gap G is formed between the two half casing parts 10, 20 as the two half casing parts 10, 20 respectively abut an outer peripheral surface of the annular supporting element 30. When the two half casing parts 10, 20 are connected, the at least one gap G is filled with a connecting material. The connecting material is able to connect the two half casing parts 10, 20 and connect the annular supporting element 30 and the two half casing parts 10, 20 at the same time.

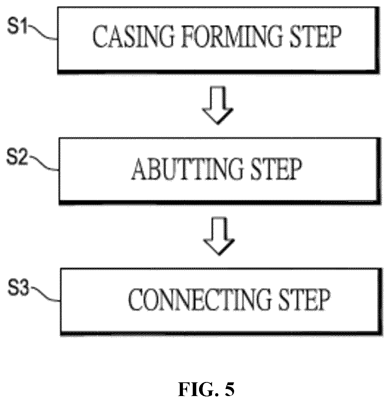

With reference to Fig. 5, a manufacturing method of the bicycle frame unit 100 includes the following steps:
A casing forming step S1: molding one or more sheets into the two half casing parts 10, 20 such that the two half casing parts 10, 20 are substantially symmetrical and are configured to abut each other along the connecting direction D. That is, the first portion 101, the second portion 102, and the third portion 103 of one said half casing part 10 are respectively aligned with those of the other said half casing part 20;
An abutting step S2: abutting the two half casing parts 10, 20 along the connecting direction D, and placing the annular supporting element 30 between the two half casing parts 10, 20 to form the at least one gap G between the two half casing parts 10, 20 and the annular supporting element 30; and
A connecting step S3: connecting the two half casing parts 10, 20 via a connecting means and filling the at least one gap G with the connecting material so as to finish the bicycle frame unit 100.

Specifically, the bicycle frame unit 100 can be metallic for constructing a metallic bicycle frame. The bicycle frame unit 100 can be connected to bicycle frame components such as tubes by welding. The bicycle frame components such as a rocker arm, a seat stay yoke, a chain stay yoke, dropouts, a bottom bracket, and pivot mounts can be manufactured by different metalworking processes such as casting and forging, and the tubes can be manufactured by turning, forging, casting, hydroforming, or other processes.

Further, in the casing forming step S1, the two half casing parts 10, 20 may be formed by additionally processing sheet metals (said sheets) by stamping, blanking, embossing, bending, flanging, deep drawing, stretching, ironing, coining, etc. Each one of the two half casing parts 10, 20 has a semi-cylindrical structure as the first portion 101, which allows the two half casing parts 10, 20 to be connected to the annular supporting element 30 after being welded together. In the first preferred embodiment, the two half casing parts 10, 20 are formed by stamping; with reference to Fig. 2, each one of the two half casing parts 10 has two connecting walls 11 on two sides for being connected with the connecting walls of the other half casing part 20. Specifically, said connecting walls 11 of the two half casing parts 10, 20 may be either butt jointed or overlapped with each other. As long as main parts of the two half casing parts 10, 20 are configured to be connected to each other, the two half casing parts 10, 20 are substantially symmetrical.

In the connecting step S3, the connecting means is welding, the two half casing parts 10, 20 are connected to each other by filler-free welding (FF welding) means such as Activated Tungsten Inert Gas welding (ATIG welding), laser beam welding (LBW), friction stir welding (FSW), etc. In this way, the two half casing parts 10, 20 are partially fused and connected, and fused materials serve as the connecting material to fill said gap G so as to connect the annular supporting element 30 at the same time.

In other embodiments, said gap G may be formed between the annular supporting element 30 and the two half casing parts 10, 20 when the connecting walls 11 of the two half casing parts 10, 20 abut against each other such that the annular supporting element 30 is located in the two half casing parts 10, 20. During connecting the two half casing parts 10, 20, the fused connecting material can seep into the two half casing parts 10, 20 and fill said gap G so as to connect the two half casing parts 10, 20 and the annular supporting element 30.

Further, in the connecting step S3, the connecting means may also adopt a normal welding process with a filler, and the filler can serve as the connecting material to fill said gap G so as to connect the two half casing parts 10, 20 and the annular supporting element 30. Besides, if the two half casing parts 10, 20 or the annular supporting element 30 is partially fused and connected with the two half casing parts 10, 20 (and the annular supporting element 30), the fused portions of the two half casing parts 10, 20 or the annular supporting element 30 also serves as the connecting material.

Moreover, the bicycle frame unit 100 may be made of thermoplastic composites material for constructing a bicycle frame using thermoplastic composites material. In the casing forming step S1, two thermoplastic composites sheets are formed into the two half casing parts 10, 20 by heat compression molding, wherein the thermoplastic composites sheets are sheets made of thermoplastic carbon fibers or thermoplastic glass fibers. In the abutting step S2, the two half casing parts 10, 20 are abutted along the connecting direction D, and the annular supporting element 30 is placed between the two half casing parts 10, 20 to form said gap G between the two half casing parts 10, 20 and the annular supporting element 30. In the connecting step S3, the connecting means utilizes heat compression molding to fuse butt jointed or overlapped positions of the two half casing parts 10, 20 to an integral, so as to make the two half casing parts 10, 20 connected. The fused portions of the two half casing parts 10, 20 fill said gap G to connect the annular supporting element 30 and the two half casing parts 10, 20 at the same time.

Specifically, in the abutting step S2, an inner support may be placed between the two half casing parts 10, 20 and abut the annular supporting element 30 so as to collocate with an outer compression mold while heat compression molding in the connecting step S3. High precision production can therefore be ensured, so the bicycle frame unit 100 after the connecting step S3 complies with designs.

With the above-mentioned technical features, when the bicycle frame unit 100 is being connected, even if redundant materials are formed in the first portion 101 (for inserting said external post such as a seat post or a portion of other components of a bicycle) of the two half casing parts 10, 20, the redundant materials are blocked outside of the annular supporting element 30 to connect the annular supporting element 30 and the two half casing parts 10, 20. Also, the two half casing parts 10, 20 can be designed thinner and lighter by utilizing the annular supporting element 30 to improve the structural strength and size control for receiving said external post. Thereby, the present invention has a simple structure and high manufacturing efficiency without inappropriately increasing steps of manufacturing processes and weight of a bicycle frame. Also, the construction-obstructing problem caused by the redundant materials is solved. Additionally, the connecting hole 31 of the annular supporting element 30 is not interfered by the connecting means, which maintains roundness of the connecting hole 31 for receiving the cylindrical seat post.

Preferably, in the first preferred embodiment, dimensions of the second portion 102 or the third portion 103 are greater than those of the first portion 101, so the second portion 102 and the third portion 103 have larger interior spaces to contain external components such as a battery unit, a data processing unit, etc. The bicycle frame unit 100 further has an operation opening 104 fluidly communicating with the inner sides and the outer sides of the two half casing parts 10, 20. In the first preferred embodiment, the operation opening 104 is formed through the third portion 103 of one of the two half casing parts 10, which is convenient for a user to charge or transfer data to the external components inside the two half casing parts 10, 20, or to maintain the components inside the two half casing parts 10, 20. Specifically, the operation opening 104 may be formed on said half casing part 10 directly in the casing forming step S1 (as known as a pre-cut opening) or by processing said half casing part 10 after the connecting step S3.

Furthermore, in the first preferred embodiment, each one of the two half casing parts 10, 20 has two pivot portions 12, 22 (particularly when the bicycle frame unit 100 is configured for constructing the bicycle frame of a mountain bike, but not limited thereto). Each pivot portion 12, 22 protrudes from the corresponding half casing part 10, 20 along a direction perpendicular to the connecting direction D and has a pivot hole 121, 221 formed through the corresponding half casing part 10, 20 along the connecting direction D. The pivot portions 12, 22 of the two half casing parts 10, 20 are disposed symmetrically. Specifically, in the first preferred embodiment, the bicycle frame unit 100 is a seat tube, and the two pivot portions 12, 22 of each one of the two half casing parts 10, 20 respectively protrude forward from a front side of the second portion 102 and backward from a rear side of the third portion 103 to be pivotally connected to a damper and a chain stay, respectively. In other embodiments, the pivot portions 12, 22 may be pivotally connected to a seat stay or a swingable component connected to a rear triangle of the bicycle frame.

Preferably, to ensure the seat post is installed onto the bicycle frame correctly, the annular supporting element 30 forms at least one slot on its top end before or after connecting the two half casing parts 10, 20 or after a complete front triangle (i.e., a head tube, a top tube, a down tube, and the seat tube) of the bicycle frame is finished; the top end of the annular supporting element 30 and the at least one slot protrude from tops of the two half casing parts 10, 20. Thereby, the at least one slot provides the annular supporting element 30 with elasticity for the convenience of inserting the seat post therein so as to improve constructing efficiency. A length of the annular supporting element 30 is preferably more than 120 millimeters to effectively hold the seat post.

Preferably, in the first preferred embodiment, a difference between an inner diameter of a cylindrical shell formed by the first portions 101 of the two half casing parts 10, 20 and an outer diameter of the annular supporting element 30 is around 0.5 millimeter. The at least one gap G is around 0.5 to 2 millimeters (endpoints included). To fix a seat post and the annular supporting element 30, the at least one gap G in the length range allows the connecting material to fill and effectively connect the two half casing parts 10, 20 and the annular supporting element 30.

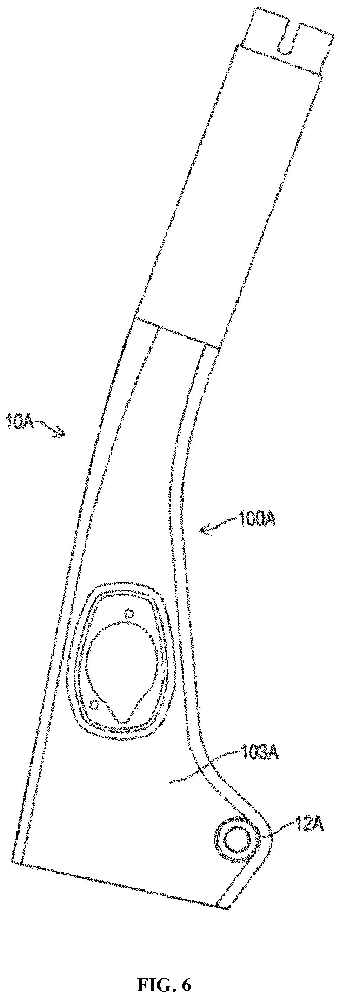

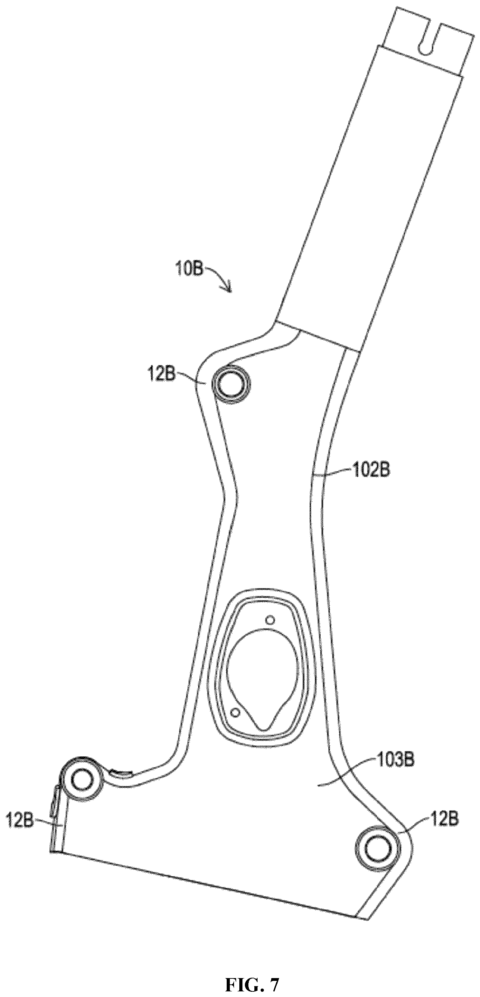

Numbers and positions of said pivot portion 12, 22 may be varied according to types of bicycles. For instance, with reference to Fig. 6, in a second preferred embodiment in accordance with the present invention, each half casing part 10A has only one said pivot portion 12A protruding backward from the third portion 103A. With reference to Fig. 7, in a third preferred embodiment in accordance with the present invention, each half casing part 10B has one said pivot portion 12B protruding forward from the second portion 102B and two said pivot portions 12B respectively formed on a front side and a rear side of the third portion 103B, which means each half casing part 10B has three said pivot portions 12B in total.

Specifically, each said pivot portion 12, 12A, 12B, 22 is formed on the corresponding half casing part 10, 10A, 10B, 20 by molding said sheets and protrudes from the corresponding half casing part 10, 10A, 10B, 20 along a direction perpendicular to the connecting direction D. After the connecting step S3, each pivot hole 121, 221 is formed through the corresponding half casing parts 10, 10A, 10B, 20 by processing the corresponding pivot portion 12, 12A, 12B, 22, and said pivot portions 12, 12A, 12B, 22 of the two half casing parts 10, 10A, 10B, 20 are disposed symmetrically. This process can be accomplished by conventional metal stamping or conventional heat compression molding of thermoplastic composites materials.

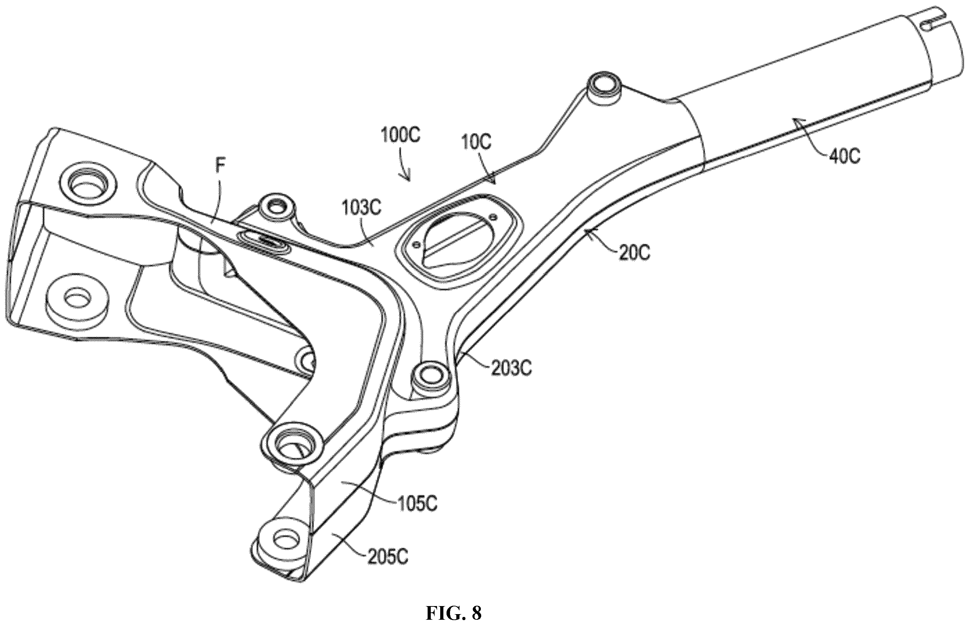

With reference to Fig. 8, a fourth preferred embodiment in accordance with the present invention differs from the third preferred embodiment in that: the bicycle frame unit 100C includes a seat tube portion 40C and a motor mount portion 50C connected to each other. The motor mount portion 50C is configured for mounting a mid-drive motor of an electric bicycle, wherein each one of the two half casing parts 10C, 20C has a motor mount section 105C, 205C connected to the third portion 103C, 203C in one piece. In other words, each one of the two half casing parts 10C, 20C has a left half or a right half of the seat tube portion 40C and the motor mount portion 50C, is formed in one piece in the casing forming step S1 such that the bicycle frame unit 100C formed by connecting the two half casing parts 10C, 20C has the seat tube portion 40C and the motor mount portion 50C.

Further, the motor mount section 105C, 205C of the two half casing parts 10C, 20C may be formed in the casing forming step S1 via molding the sheet metals with designed molds or via further processing such as drawing or stretching after molding the sheet metals, which still improves the manufacturing efficiency compared to manufacturing an individual motor mount and welding the motor mount with a bicycle frame unit afterwards.

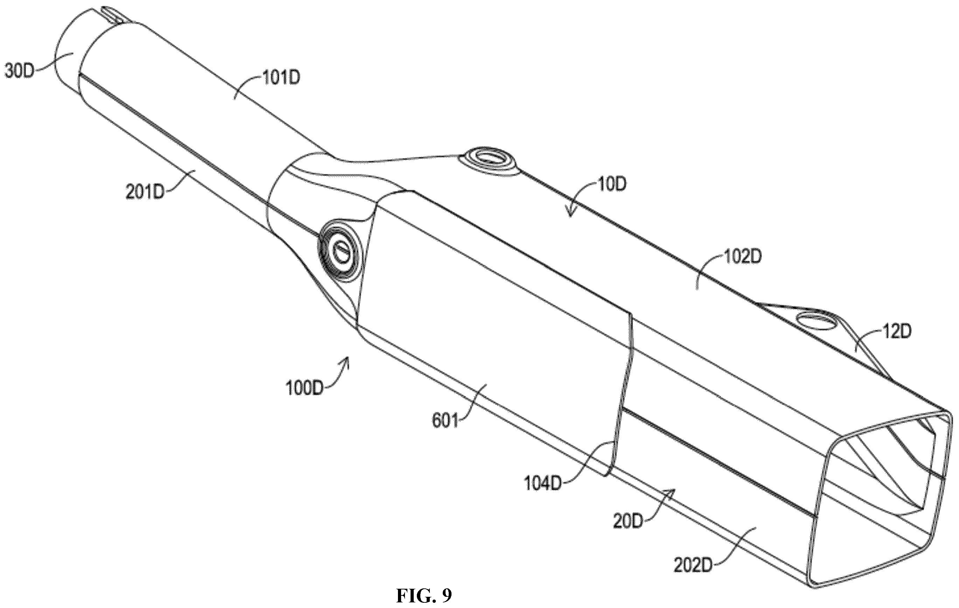

With reference to Fig. 9, a fifth preferred embodiment in accordance with the present invention differs from the first preferred embodiment in that: each one of the two half casing parts 10D, 20D of the bicycle frame unit 100D has a top tube connecting section 101D, 201D and a damper containing section 102D, 202D. The top tube connecting sections 101D, 201D of the two half casing parts 10D, 20D cover around the annular supporting element 30D and are connected to each other. Said pivot portion 12D is formed on a rear side of the damper containing section 102D, 202D, and the operation opening 104D is formed on a front side of the bicycle frame unit 100D and is jointly formed by the two half casing parts 10D, 20D. In detail, each one of the two half casing parts 10D, 20D forms a notch on its front side, and the operation opening 104D is formed by the notches of the two half casing parts 10D, 20D. The notches may be formed on the half casing parts 10D, 20D in the casing forming step S1 or formed by processing the bicycle frame unit 100D after the connecting step S3. Further, the bicycle frame unit 100D has a cover 601 to detachably cover the operation opening 104D.

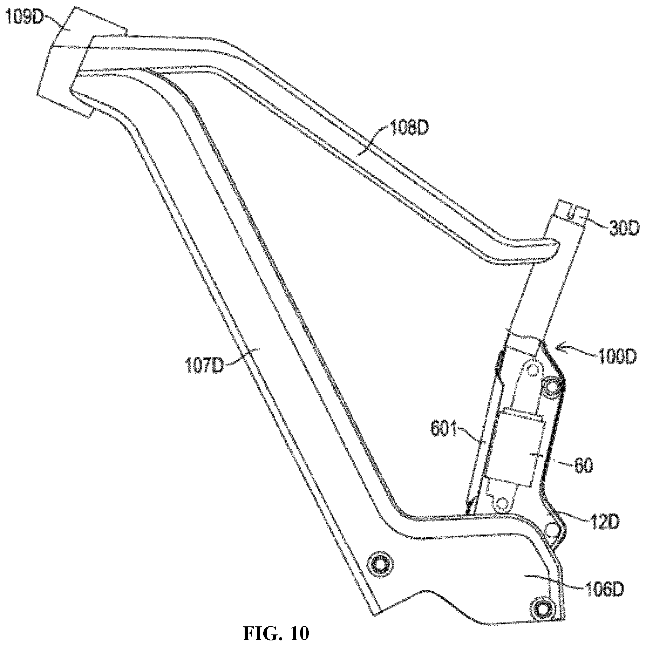

When constructing a bicycle frame with the bicycle frame unit 100D, with reference to Fig. 10, the damper containing sections 102D, 202D of the two half casing parts 10D, 20D are connected to a motor mount portion 106D and connected to a down tube portion 107D by the motor mount portion 106D. The top tube connecting sections 101D, 201D are connected to a top tube portion 108D and connected to a head tube portion 109D by the top tube portion 108D, and the top tube portion 108D and the head tube portion 109D are connected to the down tube portion 107D. With the configuration above, the bicycle frame is a bicycle frame with a damper 60 inside the damper containing sections 102D, 202D of the bicycle frame unit 100D, and a user can detach the cover 601 to maintain the damper 60 through the operation opening 104D.

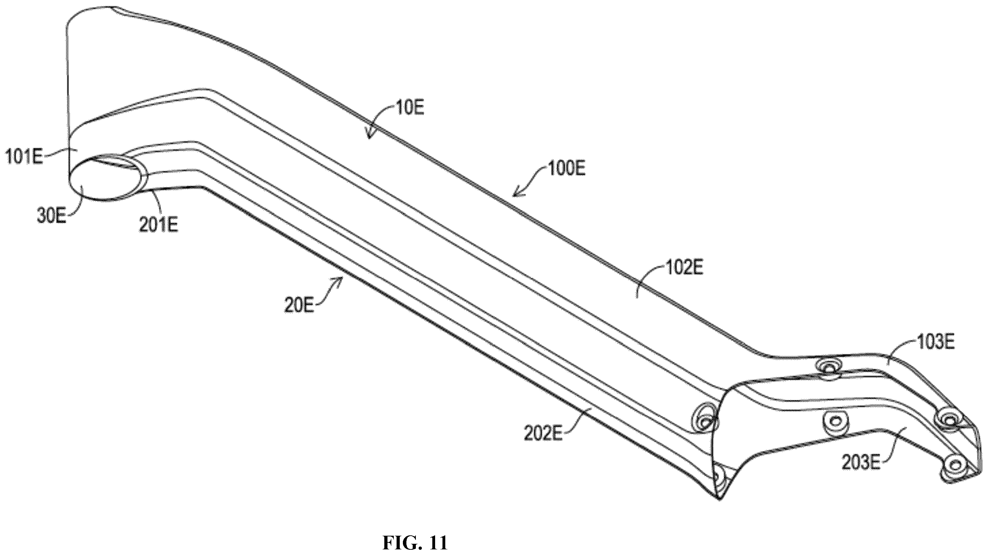

With reference to Fig. 11, a sixth preferred embodiment in accordance with the present invention differs from the first preferred embodiment in that: the bicycle frame unit 100E includes a head tube portion, a down tube portion, and a motor mount portion. Each one of the two half casing parts 10E, 20E has a head tube section 101E, 201E, a down tube section 102E, 202E, and a motor mount section 103E, 203E formed in one piece. The at least one annular supporting element 30E is connected between the head tube sections 101E, 201E of the two half casing parts 10E, 20E for receiving a fork stem (said external post).

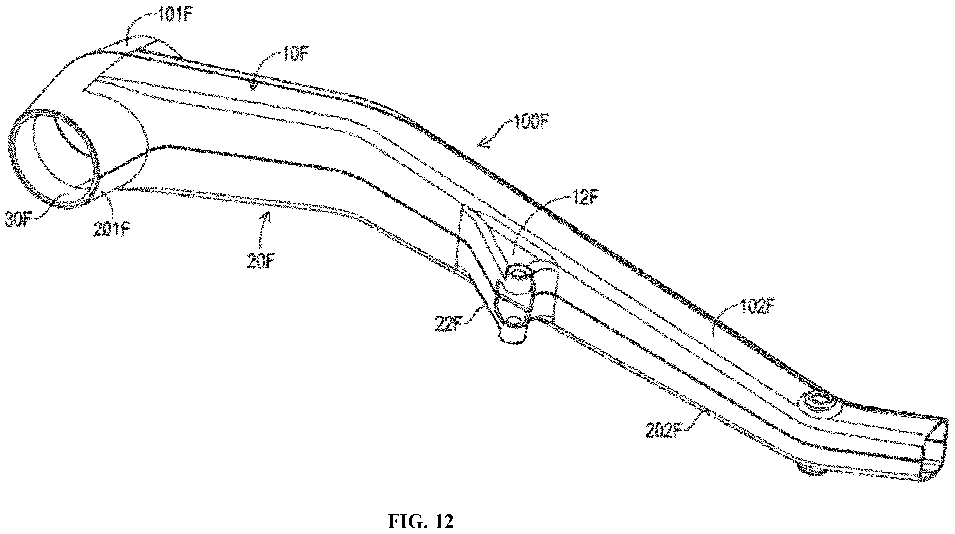

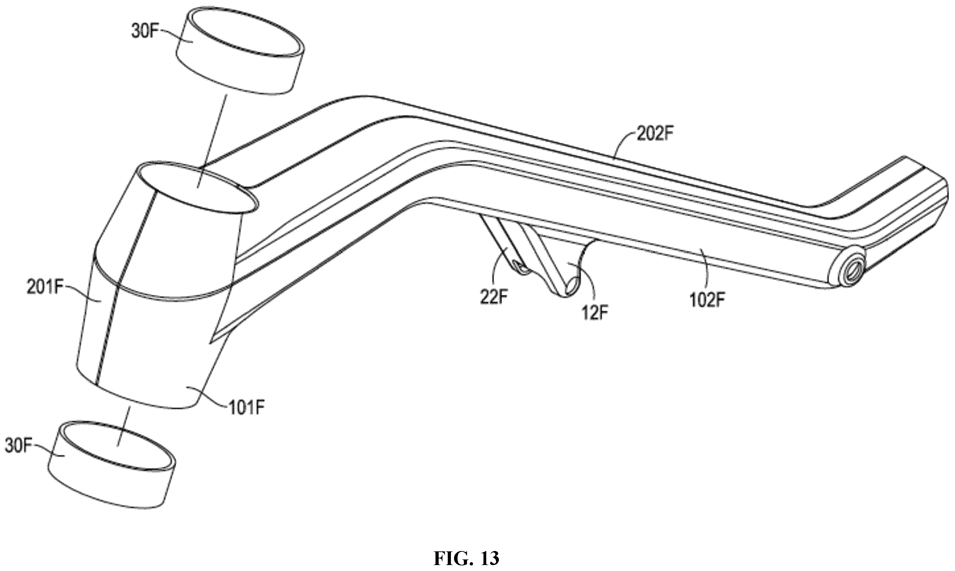

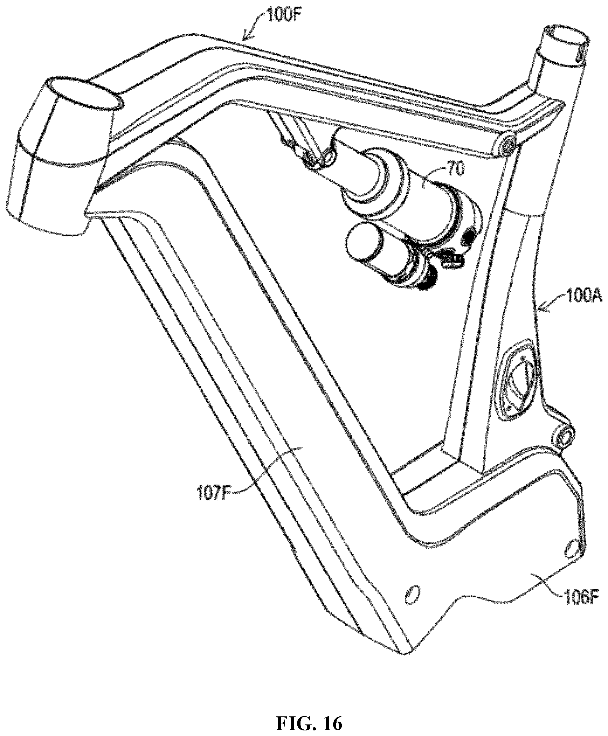

With reference to Figs. 12 to 15, a seventh preferred embodiment of the present invention differs from the first preferred embodiment in that the bicycle frame unit 100F includes a head tube portion and a top tube portion. Each one of the two half casing parts 10F, 20F has a head tube section 101F, 201F and a top tube section 102F, 202F. Two said annular supporting elements 30F are connected between said head tube section 101F, 201F of the two half casing parts 10F, 20F for receiving said fork stem. In the seventh preferred embodiment, with reference to Fig. 16, said pivot portion 12F,22F is formed on the top tube section 102F, 202F and is configured for a damper 70 to be connected thereto.

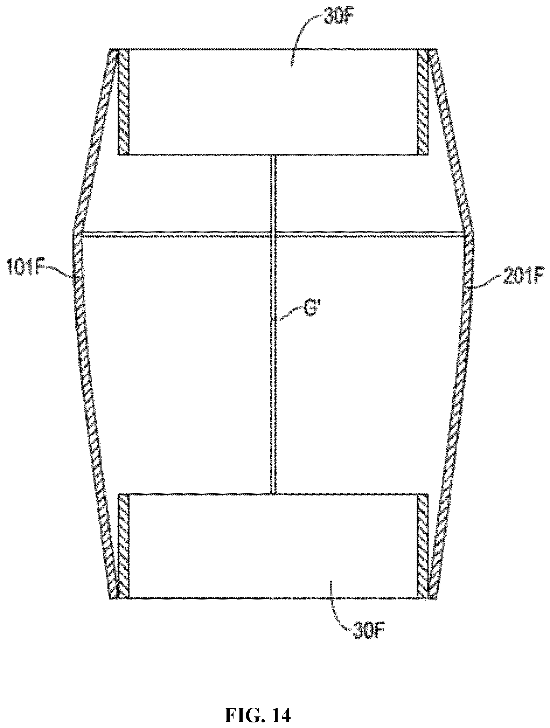

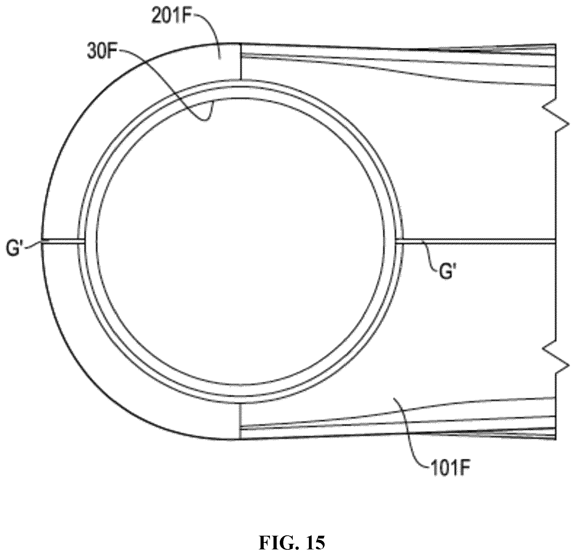

Furthermore, with reference to Figs. 14 and 15, the two annular supporting elements 30F are respectively connected to a top and a bottom of said head tube section 101F, 201F, and said gap G' is formed between the two half casing parts 10F, 20F. When the two half casing parts 10F are connected to each other, said gap G' is filled with the connecting material so as to connect the two annular supporting elements 30F and the two half casing parts 10F, 20F at the same time. Since the two annular supporting elements 30F are short, an operator may particularly reinforce the strength of connecting points between the two annular supporting elements 30F and the two half casing parts 10F, 20F. For example, for the metallic bicycle frame, friction stir welding or the like may be applied in a middle of the two annular supporting elements 30F and the two half casing parts 10F, 20F (said gap G' can also be formed between each one of the two half casing parts 10F, 20F and the two annular supporting elements 30F by design), which allows the two annular supporting elements 30F and the two half casing parts 10F, 20F to be firmly connected to each other.

With reference to Fig. 16, the bicycle frame unit 100F in the seventh preferred embodiment and the bicycle frame unit 100A in the second preferred embodiment can be connected to each other first and then be connected to a down tube portion 107F and a motor mount portion 106F to form a bicycle frame. In other words, where the different bicycle frame units described in the above-mentioned preferred embodiments have no technical conflicts, the two half casing parts and the at least one annular supporting post connected to each other by the connecting material filling said gap in the present invention can be applied in the different bicycle frame units to maintain high manufacturing efficiency and ensure assembling accuracy and structural strength of a bicycle product.

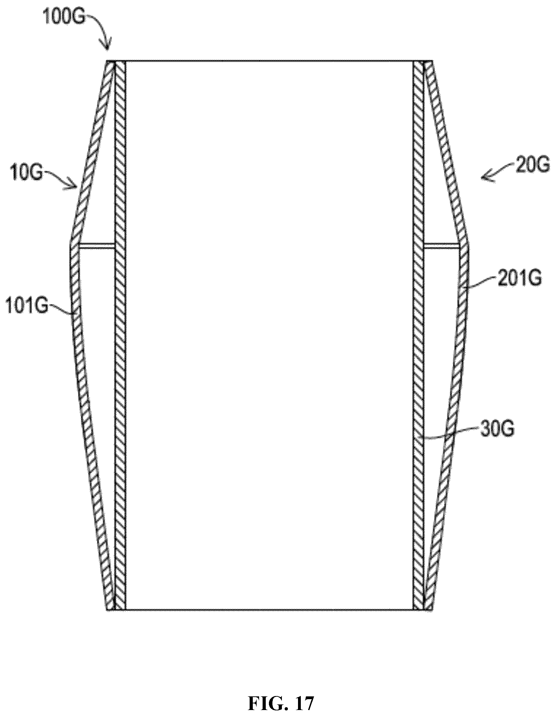

With reference to Fig. 17, an eighth preferred embodiment in accordance with the present invention differs from the seventh preferred embodiment in that: the bicycle frame unit 100G has only one said annular supporting element 30G being a sleeve having a length as long as that of the head tube sections 101G, 201G of the two half casing parts 10G, 20G. Thus, an overlapping section of said gap G' and the annular supporting element 30G has a larger length such that the annular supporting element 30G can be firmly connected to the two half casing parts 10G, 20G when said gap is filled with the connecting material. Therefore, extra reinforcing processes can be saved.

Even though numerous characteristics and advantages of the present invention have been set forth in the foregoing description, together with details of the structure and features of the invention, the disclosure is illustrative only. Changes may be made in the details, especially in matters of shape, size, and arrangement of parts as long as they fall within the scope of the invention which is defined by the appended claims.

## Claims

1. A bicycle frame unit (100, 100A, 100C, 100D, 100E, 100F, 100G) for constructing a bicycle frame, the bicycle frame unit (100, 100A, 100C, 100D, 100E, 100F, 100G) comprising:
two half casing parts (10, 10A ,10B, 10C, 10D, 10E, 10F, 10G, 20, 20C, 20D, 20E, 20F, 20G) connected to each other along a connecting direction (D) and being substantially symmetrical; and
at least one annular supporting element (30, 30D, 30E, 30F, 30G) connected between the two half casing parts (10, 10A, 10B, 10C, 10D, 10E, 10F, 10G, 20, 20C, 20D, 20E, 20F, 20G) and having
a connecting hole (31) formed therein and configured for matching an outer contour of a seat post or a front fork stem;
**characterized in that** the two half casing parts (10, 10A, 10B, 10C, 10D, 10E, 10F, 10G, 20, 20C, 20D, 20E, 20F, 20G) respectively abut the at least one annular supporting element (30, 30D, 30E, 30F, 30G) to form at least one gap (G, G') located between the two half casing parts (10, 10A , 10B, 10C, 10D, 10E, 10F, 10G, 20, 20C, 20D, 20E, 20F, 20G), adjoining the at least one annular supporting element (30, 30D, 30E, 30F, 30G), and filled with a connecting material.

2. The bicycle frame unit (100, 100A, 100C, 100D, 100E, 100F, 100G) as claimed in claim 1, wherein the connecting material includes at least one of a filler, a fused portion of the at least one annular supporting element (30, 30D, 30E, 30F, 30G), and a fused portion of each one of the two half casing parts (10, 10A ,10B, 10C, 10D, 10E, 10F, 10G, 20, 20C, 20D, 20E, 20F, 20G).

3. The bicycle frame unit (100, 100A, 100C, 100D, 100E, 100F, 100G) as claimed in claim 1 or 2, wherein
each one of the two half casing parts (10, 10A , 10B, 10C, 10D, 10E, 10F, 10G, 20, 20C, 20D, 20E, 20F, 20G) has
at least one pivot portion (12, 12A, 12B, 12D, 12F, 22, 22F) protruding from the corresponding half casing part (10, 10A ,10B, 10C, 10D, 10E, 10F, 10G, 20, 20C, 20D, 20E, 20F, 20G) along a direction perpendicular to the connecting direction (D) and having
a pivot hole (121, 221) formed through the corresponding half casing part (10, 10A, 10B, 10C, 10D, 10E, 10F, 10G, 20, 20C, 20D, 20E, 20F, 20G) along the connecting direction (D); and
the pivot portions (12, 12A, 12B, 12D, 12F, 22, 22F) of the two half casing parts (10, 10A , 10B, 10C, 10D, 10E, 10F, 10G, 20, 20C, 20D, 20E, 20F, 20G) are disposed symmetrically.

4. The bicycle frame unit (100, 100A, 100C, 100D, 100E, 100F, 100G) as claimed in claim 3, wherein each pivot portion (12, 12A, 12B, 12D, 12F, 22, 22F) is configured to be pivotally connected to a damper (60), a chain stay or a seat stay of the bicycle frame.

5. The bicycle frame unit (100, 100A, 100C, 100D) as claimed in any one of claim 1 or 2, wherein
the bicycle frame unit (100, 100A, 100C, 100D) has an operation opening (104, 104D) fluidly communicating with inner sides and outer sides of the two half casing parts (10, 10A , 10B, 10C, 10D, 20, 20C, 20D); and
the operation opening (104, 104D) is formed through one of the two half casing parts (10, 10A , 10B, 10C, 10D, 20, 20C, 20D) or jointly formed by the two half casing parts (10, 10A , 10B, 10C, 10D, 20, 20C, 20D).

6. A manufacturing method of a bicycle frame unit (100, 100A, 100C, 100D, 100E, 100F, 100G), wherein the manufacturing method comprises the following steps:
a casing forming step (S1), molding one or more sheets into two half casing parts (10, 10A ,10B, 10C, 10D, 10E, 10F, 10G, 20, 20C, 20D, 20E, 20F, 20G) being substantially symmetrical and configured to abut against each other along a connecting direction (D);
an abutting step (S2), abutting the two half casing parts (10, 10A , 10B, 10C, 10D, 10E, 10F, 10G, 20, 20C, 20D, 20E, 20F, 20G) against at least one annular supporting element (30, 30D, 30E, 30F, 30G) along the connecting direction (D) to form at least one gap (G, G') located between the two half casing parts (10, 10A , 10B, 10C, 10D, 10E, 10F, 10G, 20, 20C, 20D, 20E, 20F, 20G) and adjoining the at least one annular supporting element (30, 30D, 30E, 30F, 30G); and
a connecting step (S3), connecting the two half casing parts (10, 10A , 10B, 10C, 10D, 10E, 10F, 10G, 20, 20C, 20D, 20E, 20F, 20G) via a connecting means and filling the at least one gap (G, G') with a connecting material so as to finish a bicycle frame unit (100, 100A, 100C, 100D, 100E, 100F, 100G).

7. The manufacturing method of a bicycle frame unit (100, 100A, 100C, 100D, 100E, 100F, 100G) as claimed in claim 6, wherein
in the casing forming step (S1), each one of the two half casing parts (10, 10A , 10B, 10C, 10D, 10E, 10F, 10G, 20, 20C, 20D, 20E, 20F, 20G) is formed by molding to have at least one pivot portion (12, 12A, 12B, 12D, 12F, 22, 22F) protruding from the corresponding half casing part (10, 10A ,10B, 10C, 10D, 10E, 10F, 10G, 20, 20C, 20D, 20E, 20F, 20G) along a direction perpendicular to the connecting direction (D); and
after the connecting step (S3), a pivot hole (121, 221) is formed through the corresponding half casing part (10, 10A ,10B, 10C, 10D, 10E, 10F, 10G, 20, 20C, 20D, 20E, 20F, 20G) on each one of the pivot portions (12, 12A, 12B, 12D, 12F, 22, 22F) by processing each one of the pivot portions (12, 12A, 12B, 12D, 12F, 22, 22F), and the pivot portions (12, 12A, 12B, 12D, 12F, 22, 22F) of the two half casing parts (10, 10A ,10B, 10C, 10D, 10E, 10F, 10G, 20, 20C, 20D, 20E, 20F, 20G) are disposed symmetrically.

8. The manufacturing method of a bicycle frame unit (100, 100A, 100C, 100D) as claimed in claim 6, wherein in the casing forming step (S1), an operation opening (104, 104D) is formed on at least one of the two half casing parts (10, 10A , 10B, 10C, 10D, 20, 20C, 20D) and fluidly communicates with inner sides and outer sides of the two half casing parts (10, 10A , 10B, 10C, 10D, 20, 20C, 20D).

9. The manufacturing method of a bicycle frame unit (100, 100A, 100C, 100D) as claimed in claim 6, wherein after the connecting step (S3), an operation opening (104, 104D) is formed on at least one of the two half casing parts (10, 10A , 10B, 10C, 10D, 20, 20C, 20D) and fluidly communicates with inner sides and outer sides of the casing parts (10, 10A ,10B, 10C, 10D, 20, 20C, 20D).

## Patentansprüche

1. Fahrradrahmeneinheit (100, 100A, 100C, 100D, 100E, 100F, 100G) zum Aufbauen eines Fahrradrahmens, wobei die Fahrradrahmeneinheit (100, 100A, 100C, 100D, 100E, 100F, 100G) umfasst:
zwei Gehäusehälfteteile (10, 10A, 10B, 10C, 10D, 10E, 10F, 10G, 20, 20C, 20D, 20E, 20F, 20G), die entlang einer Verbindungsrichtung (D) miteinander verbunden und im Wesentlichen symmetrisch sind; und
zumindest ein ringförmiges Stützelement (30, 30D, 30E, 30F, 30G), das zwischen den zwei Gehäusehälfteteilen (10, 10A, 10B, 10C, 10D, 10E, 10F, 10G, 20, 20C, 20D, 20E, 20F, 20G) verbunden ist und ein Verbindungsloch (31) aufweist, das darin eingebracht ist und dafür ausgelegt ist, zu einer Außenkontur einer Sattelstütze oder eines Vordergabelschaftes zu passen;
**dadurch gekennzeichnet, dass**
die zwei Gehäusehälfteteile (10, 10A, 10B, 10C, 10D, 10E, 10F, 10G, 20, 20C, 20D, 20E, 20F, 20G) jeweils an das zumindest eine ringförmige Stützelement (30, 30D, 30E, 30F, 30G) anstoßen, um zumindest eine Lücke (G, G') zu bilden, die zwischen den zwei Gehäusehälfteteilen (10, 10A, 10B, 10C, 10D, 10E, 10F, 10G, 20, 20C, 20D, 20E, 20F, 20G) gelegen ist, an das zumindest eine ringförmige Stützelement (30, 30D, 30E, 30F, 30G) angrenzt und mit einem Verbindungsmaterial gefüllt ist.

2. Fahrradrahmeneinheit (100, 100A, 100C, 100D, 100E, 100F, 100G) nach Anspruch 1, worin das Verbindungsmaterial zumindest einen von einem Füllstoff, einem geschmolzenen Abschnitt des zumindest einen ringförmigen Stützelementes (30, 30D, 30E, 30F, 30G) und einem geschmolzenen Abschnitt jedes einzelnen der zwei Gehäusehälfteteile (10, 10A, 10B, 10C, 10D, 10E, 10F, 10G, 20, 20C, 20D, 20E, 20F, 20G) umfasst.

3. Fahrradrahmeneinheit (100, 100A, 100C, 100D, 100E, 100F, 100G) nach Anspruch 1 oder 2, worin
jeder einzelne der zwei Gehäusehälfteteile (10, 10A, 10B, 10C, 10D, 10E, 10F, 10G, 20, 20C, 20D, 20E, 20F, 20G)
zumindest einen Drehabschnitt (12, 12A, 12B, 12D, 12F, 22, 22F) hat, der aus dem entsprechenden Gehäusehälfteteil (10, 10A, 10B, 10C, 10D, 10E, 10F, 10G, 20, 20C, 20D, 20E, 20F, 20G) entlang einer Richtung herausragt, die zur Verbindungsrichtung (D) senkrecht ist, und der
ein Drehloch (121, 221) hat, der durch den entsprechenden Gehäusehälfteteil (10, 10A, 10B, 10C, 10D, 10E, 10F, 10G, 20, 20C, 20D, 20E, 20F, 20G) entlang der Verbindungsrichtung (D) ausgebildet ist; und
die Drehabschnitte (12, 12A, 12B, 12D, 12F, 22, 22F) der zwei Gehäusehälfteteile (10, 10A, 10B, 10C, 10D, 10E, 10F, 10G, 20, 20C, 20D, 20E, 20F, 20G) symmetrisch angeordnet sind.

4. Fahrradrahmeneinheit (100, 100A, 100C, 100D, 100E, 100F, 100G) nach Anspruch 3, worin jeder Drehabschnitt (12, 12A, 12B, 12D, 12F, 22, 22F) dafür ausgelegt ist, mit einem Dämpfer (60), einer Kettenstrebe oder einer Sattelstrebe des Fahrradrahmens schwenkbar verbunden zu werden.

5. Fahrradrahmeneinheit (100, 100A, 100C, 100D) nach einem der Ansprüche 1 oder 2, worin
die Fahrradrahmeneinheit (100, 100A, 100C, 100D) eine Bedienungsöffnung (104, 104D) hat, die mit inneren Seiten und äußeren Seiten der zwei Gehäusehälfteteile (10, 10A, 10B, 10C, 10D, 20, 20C, 20D) fluidmäßig in Kommunikation steht; und
die Bedienungsöffnung (104, 104D) durch einen der zwei Gehäusehälfteteile (10, 10A, 10B, 10C, 10D, 20, 20C, 20D) gebildet ist oder zusammen von den zwei Gehäusehälfteteilen (10, 10A, 10B, 10C, 10D, 20, 20C, 20D) gebildet ist.

6. Herstellungsverfahren einer Fahrradrahmeneinheit (100, 100A, 100C, 100D, 100E, 100F, 100G), worin
das Herstellungsverfahren die folgenden Schritte umfasst:
einen Gehäusebildungsschritt (S1), in dem ein oder mehrere Blätter in zwei Gehäusehälfteteile (10, 10A, 10B, 10C, 10D, 10E, 10F, 10G, 20, 20C, 20D, 20E, 20F, 20G) geformt werden, die im Wesentlichen symmetrisch sind und dafür ausgelegt sind, entlang einer Verbindungsrichtung (D) gegeneinander zu stoßen;
einen Anstoßschritt (S2), in dem die zwei Gehäusehälfteteile (10, 10A, 10B, 10C, 10D, 10E, 10F, 10G, 20, 20C, 20D, 20E, 20F, 20G) gegen zumindest ein ringförmiges Stützelement (30, 30D, 30E, 30F, 30G) entlang der Verbindungsrichtung (D) anstoßen, um zumindest eine Lücke (G, G') zu bilden, die zwischen den zwei Gehäusehälfteteilen (10, 10A, 10B, 10C, 10D, 10E, 10F, 10G, 20, 20C, 20D, 20E, 20F, 20G) gelegen ist, und an das zumindest eine ringförmige Stützelement (30, 30D, 30E, 30F, 30G) angrenzen; und
einen Verbindungsschritt (S3), in dem die zwei Gehäusehälfteteile (10, 10A, 10B, 10C, 10D, 10E, 10F, 10G, 20, 20C, 20D, 20E, 20F, 20G) über ein Verbindungsmittel verbunden werden und in dem die zumindest eine Lücke (G, G') mit einem Verbindungsmaterial gefüllt wird, so dass eine Fahrradrahmeneinheit (100, 100A, 100C, 100D, 100E, 100F, 100G) fertiggestellt wird.

7. Herstellungsverfahren einer Fahrradrahmeneinheit (100, 100A, 100C, 100D, 100E, 100F, 100G) nach Anspruch 6, worin
im Gehäusebildungsschritt (S1), jeder einzelne der zwei Gehäusehälfteteile (10, 10A, 10B, 10C, 10D, 10E, 10F, 10G, 20, 20C, 20D, 20E, 20F, 20G) durch Formen gebildet wird, damit zumindest ein Drehabschnitt (12, 12A, 12B, 12D, 12F, 22, 22F) aus dem entsprechenden Gehäusehälfteteil (10, 10A, 10B, 10C, 10D, 10E, 10F, 10G, 20, 20C, 20D, 20E, 20F, 20G) entlang einer Richtung herausragt, die zur Verbindungsrichtung (D) senkrecht ist; und
nach dem Verbindungsschritt (S3), ein Drehloch (121, 221) durch den entsprechenden Gehäusehälfteteil (10, 10A, 10B, 10C, 10D, 10E, 10F, 10G, 20, 20C, 20D, 20E, 20F, 20G) an jedem der Drehabschnitte (12, 12A, 12B, 12D, 12F, 22, 22F) durch Bearbeiten jedes einzelnen der Drehabschnitte (12, 12A, 12B, 12D, 12F, 22, 22F) ausgebildet ist, und die Drehabschnitte (12, 12A, 12B, 12D, 12F, 22, 22F) der zwei Gehäusehälfteteile (10, 10A, 10B, 10C, 10D, 10E, 10F, 10G, 20, 20C, 20D, 20E, 20F, 20G) symmetrisch angeordnet sind.

8. Herstellungsverfahren einer Fahrradrahmeneinheit (100, 100A, 100C, 100D) nach Anspruch 6, worin im Gehäusebildungsschritt (S1) eine Bedienungsöffnung (104, 104D) an zumindest einem der zwei Gehäusehälfteteile (10, 10A, 10B, 10C, 10D, 20, 20C, 20D) gebildet ist und mit inneren Seiten und äußeren Seiten der zwei Gehäusehälfteteile (10, 10A, 10B, 10C, 10D, 20, 20C, 20D) fluidmäßig in Kommunikation steht.

9. Herstellungsverfahren einer Fahrradrahmeneinheit (100, 100A, 100C, 100D) nach Anspruch 6, worin nach dem Verbindungsschritt (S3) eine Bedienungsöffnung (104, 104D) an zumindest einem der zwei Gehäusehälfteteile (10, 10A, 10B, 10C, 10D, 20, 20C, 20D) gebildet ist und mit inneren Seiten und äußeren Seiten der Gehäuseteile (10, 10A, 10B, 10C, 10D, 20, 20C, 20D) fluidmäßig in Kommunikation steht.

## Revendications

1. Unité de cadre de bicyclette (100, 100A, 100C, 100D, 100E, 100F, 100G) pour construire un cadre de bicyclette, l'unité de cadre de bicyclette (100, 100A, 100C, 100D, 100E, 100F, 100G) comprenant :
deux parties de demi-boîtier (10, 10A, 10B, 10C, 10D, 10E, 10F, 10G, 20, 20C, 20D, 20E, 20F, 20G) reliées l'une à l'autre le long d'une direction de connexion (D) et étant sensiblement symétriques ; et
au moins un élément de support annulaire (30, 30D, 30E, 30F, 30G) relié entre les deux parties de demi-boîtier (10, 10A, 10B, 10C, 10D, 10E, 10F, 10G, 20, 20C, 20D, 20E, 20F, 20G) et ayant
un trou de connexion (31) formé dans celui-ci et configuré pour correspondre à un contour extérieur d'une tige de selle ou d'une tige de fourche avant ;
**caractérisée en ce que**
les deux parties de demi-boîtier (10, 10A, 10B, 10C, 10D, 10E, 10F, 10G, 20, 20C, 20D, 20E, 20F, 20G) butent respectivement contre l'au moins un élément de support annulaire (30, 30D, 30E, 30F, 30G) pour former au moins un espace (G, G') situé entre les deux parties de demi-boîtier (10, 10A, 10B, 10C, 10D, 10E, 10F, 10G, 20, 20C, 20D, 20E, 20F, 20G), adjacent à l'au moins un élément de support annulaire (30, 30D, 30E, 30F, 30G), et rempli d'un matériau de connexion.

2. Unité de cadre de bicyclette (100, 100A, 100C, 100D, 100E, 100F, 100G) selon la revendication 1, dans laquelle le matériau de connexion comprend au moins un élément de remplissage, une partie fondue de l'au moins un élément de support annulaire (30, 30D, 30E, 30F, 30G) et une partie fondue de chacune des deux parties de demi-boîtier (10, 10A, 10B, 10C, 10D, 10E, 10F, 10G, 20, 20C, 20D, 20E, 20F, 20G).

3. Unité de cadre de bicyclette (100, 100A, 100C, 100D, 100E, 100F, 100G) selon la revendication 1 ou 2, dans laquelle
chacune des deux parties de demi-boîtier (10, 10A, 10B, 10C, 10D, 10E, 10F, 10G, 20, 20C, 20D, 20E, 20F, 20G) a
au moins une partie de pivot (12, 12A, 12B, 12D, 12F, 22, 22F) faisant saillie de la partie de demi-boîtier correspondante (10, 10A, 10B, 10C, 10D, 10E, 10F, 10G, 20, 20C, 20D, 20E, 20F, 20G) le long d'une direction perpendiculaire à la direction de connexion (D) et ayant
un trou de pivot (121, 221) formé à travers la partie de demi-boîtier correspondante (10, 10A, 10B, 10C, 10D, 10E, 10F, 10G, 20, 20C, 20D, 20E, 20F, 20G) le long de la direction de connexion (D) ; et
les parties de pivot (12, 12A, 12B, 12D, 12F, 22, 22F) des deux parties de demi-boîtier (10, 10A, 10B, 10C, 10D, 10E, 10F, 10G, 20, 20C, 20D, 20E, 20F, 20G) sont disposées symétriquement.

4. Unité de cadre de bicyclette (100, 100A, 100C, 100D, 100E, 100F, 100G) selon la revendication 3, dans laquelle chaque partie de pivot (12, 12A, 12B, 12D, 12F, 22, 22F) est configurée pour être connectée de manière pivotante à un amortisseur (60), une base arrière ou un hauban du cadre de bicyclette.

5. Unité de cadre de bicyclette (100, 100A, 100C, 100D) selon l'une quelconque des revendications 1 ou 2, dans laquelle
l'unité de cadre de bicyclette (100, 100A, 100C, 100D) a une ouverture de fonctionnement (104, 104D) communiquant de manière fluide avec les côtés intérieurs et les côtés extérieurs des deux parties de demi-boîtier (10, 10A, 10B, 10C, 10D, 20, 20C, 20D) ; et
l'ouverture de fonctionnement (104, 104D) est formée à travers l'une des deux parties de demi-boîtier (10, 10A, 10B, 10C, 10D, 20, 20C, 20D) ou formée conjointement par les deux parties de demi-boîtier (10, 10A, 10B, 10C, 10D, 20, 20C, 20D).

6. Procédé de fabrication d'une unité de cadre de bicyclette (100, 100A, 100C, 100D, 100E, 100F, 100G), dans lequel le procédé de fabrication comprend les étapes suivantes :
une étape de formation de boîtier (S1), le moulage d'une ou plusieurs feuilles en deux demi-parties de boîtier (10, 10A, 10B, 10C, 10D, 10E, 10F, 10G, 20, 20C, 20D, 20E, 20F, 20G) étant sensiblement symétriques et configurées pour buter l'une contre l'autre le long d'une direction de connexion (D) ;
une marche de butée (S2), venant buter contre les deux parties de demi-boîtier (10, 10A, 10B, 10C, 10D, 10E, 10F, 10G, 20, 20C, 20D, 20E, 20F, 20G) contre au moins un élément de support annulaire (30, 30D, 30E, 30F, 30G) le long de la direction de connexion (D) pour former au moins un espace (G, G') situé entre les deux parties de demi-boîtier (10, 10A, 10B, 10C, 10D, 10E, 10F, 10G, 20, 20C, 20D, 20E, 20F, 20G) et adjacent à l'au moins un élément de support annulaire (30, 30D, 30E, 30F, 30G) ; et
une étape de connexion (S3), reliant les deux parties de demi-boîtier (10, 10A, 10B, 10C, 10D, 10E, 10F, 10G, 20, 20C, 20D, 20E, 20F, 20G) par l'intermédiaire d'un moyen de connexion et remplissant l'au moins un espace (G, G') avec un matériau de connexion de manière à terminer une unité de cadre de bicyclette (100, 100A, 100C, 100D, 100E, 100F, 100G).

7. Procédé de fabrication d'une unité de cadre de bicyclette (100, 100A, 100C, 100D, 100E, 100F, 100G) selon la revendication 6, dans lequel
dans l'étape de formation de boîtier (S1), chacune des deux parties de demi-boîtier (10, 10A, 10B, 10C, 10D, 10E, 10F, 10G, 20, 20C, 20D, 20E, 20F, 20G) est formée par moulage pour avoir au moins une partie de pivot (12, 12A, 12B, 12D, 12F, 22, 22F) faisant saillie de la partie de demi-boîtier correspondante (10, 10A, 10B, 10C, 10D, 10E, 10F, 10G, 20, 20C, 20D, 20E, 20F, 20G) le long d'une direction perpendiculaire à la direction de connexion (D) ; et
après l'étape de connexion (S3), un trou de pivot (121, 221) est formé à travers la partie de demi-boîtier correspondante (10, 10A, 10B, 10C, 10D, 10E, 10F, 10G, 20, 20C, 20D, 20E, 20F, 20G) sur chacune des parties de pivot (12, 12A, 12B, 12D, 12F, 22, 22F) en traitant chacune des parties de pivot (12, 12A, 12B, 12D, 12F, 22, 22F), et les parties de pivot (12, 12A, 12B, 12D, 12F, 22, 22F) des deux parties de demi-boîtier (10, 10A, 10B, 10C, 10D, 10E, 10F, 10G, 20, 20C, 20D, 20E, 20F, 20G) sont disposées symétriquement.

8. Procédé de fabrication d'une unité de cadre de bicyclette (100, 100A, 100C, 100D) selon la revendication 6, dans lequel dans l'étape de formation de boîtier (S1), une ouverture de fonctionnement (104, 104D) est formée sur au moins l'une des deux demi-parties de boîtier (10, 10A, 10B, 10C, 10D, 20, 20C, 20D) et communique de manière fluide avec les côtés intérieurs et les côtés extérieurs des deux parties de demi-boîtier (10, 10A, 10B, 10C, 10D, 20, 20C, 20D).

9. Procédé de fabrication d'une unité de cadre de bicyclette (100, 100A, 100C, 100D) selon la revendication 6, dans lequel après l'étape de connexion (S3), une ouverture de fonctionnement (104, 104D) est formée sur au moins l'une des deux parties de demi-boîtier (10, 10A, 10B, 10C, 10D, 20, 20C, 20D) et communique de manière fluide avec les côtés intérieurs et les côtés extérieurs des parties de boîtier (10, 10A, 10B, 10C, 10D, 20, 20C, 20D).
